# EUROPÄISCHE PATENTSCHRIFT

(11) **EP 3 578 416 B1**
(45) Veröffentlichungstag und Bekanntmachung des Hinweises auf die Patenterteilung: **07.07.2021**
(21) Anmeldenummer: 19177282.1
(22) Anmeldetag: 29.05.2019
(51) Int. Cl.: B60P 7/15

(54) **VORRICHTUNG ZUR LADUNGSSICHERUNG**
DEVICE FOR SECURING LOADS
DISPOSITIF DE SÉCURISATION DU CHARGEMENT

(30) Priorität: 06.06.2018 DE 102018113532
(43) Veröffentlichungstag der Anmeldung: 11.12.2019
(73) Patentinhaber: Kiesling Fahrzeugbau GmbH, 89160 Dornstadt-Tomerdingen (DE)
(72) Erfinder: Kiesling, Peter, 89081 Ulm (DE)
(74) Vertreter: Baur & Weber Patentanwälte PartG mbB

(56) Entgegenhaltungen:
- DE-A1- 1 781 124
- DE-A1-102004 011 003
- DE-A1-102008 048 581
- DE-A1-102015 106 954

## Beschreibung

Die Erfindung betrifft eine Vorrichtung zur Ladungssicherung, insbesondere mittels vertikaler Absperrung in einem Kühlfahrzeugaufbau.

Aus dem allgemeinen Stand der Technik ist es bekannt, sogenannte Absperrstangen zur Ladungssicherung einzusetzen. Diese werden zwischen gegenüberliegenden Flächen eingebracht, so dass sowohl eine vertikale als auch eine horizontale Absperrung erreicht werden kann. Insbesondere bei geschlossenen Aufbauten, wie sie beispielsweise aus Kühlfahrzeugen bekannt sind, weist jedoch eine vertikale Absperrung Vorteile gegenüber der Querabsperrung auf. So ist eine Sicherung des Ladungsgutes über die gesamte Höhe möglich, so dass beispielsweise einzelne Ladungsteile auf einem Rollcontainer über die gesamte Höhe des Laderaums gesichert sind. Desweiteren können auch Teilladungen sowohl in Längsrichtung als auch seitlich gesichert werden. Da bei einer Querabsperrung eine Sicherung nur über die gesamte Breite möglich ist, hat sich insbesondere bei Kühlfahrzeugen die vertikale Absperrung durchgesetzt.

Hierzu wurden unterschiedliche Systeme vorgeschlagen. So ist z. B. auch ein Klemmbalken bekannt, der zumindest an einem axialen Ende mit einem Gummipuffer versehen ist. Der Vorteil einer derartigen Lösung liegt darin, dass der Klemmbalken an einer beliebigen Stelle im Aufbau angeordnet werden kann, so dass Ladungsgut mit unterschiedlichen Abmessungen gesichert werden kann. Problematisch ist jedoch, dass ein derartiger Klemmbalken nur eine geringe Haltekraft aufweist, da diese lediglich durch Kraftschluss erreicht wird. Eine Erhöhung der Haltekraft kann sowohl über eine Verbesserung der Haftreibung als auch durch eine Zunahme einer Normalkraft erfolgen. Da nach Auswahl geeigneter Materialen eine Haftreibzahl nicht weiter erhöht werden kann, begrenzt die aufzubringende Normalkraft des Klemmbalkens, da diese aufgrund der endlichen Stabilität des Daches nicht beliebig erhöht werden kann. In der Praxis werden Haltekräfte bis ca. 140 kg erreicht.

Nach derzeit geltenden Verordnungen zur Ladungssicherung sollte die seitliche Absperrkraft mindestens die Hälfte des Gewichts des Ladungsguts betragen. Demnach wäre beispielsweise eine Palette mit 700 kg Masse mit einer Haltekraft von mindestens 350 kg seitlich zu sichern. In diesem Beispiel wurde erst bei drei Klemmbalken eine ausreichende Sicherung erreicht werden. Dies führt jedoch zu relativ komplexen Anwendungen, da viele Klemmbalken zugeführt und richtig eingesetzt werden müssen. Gummifüße sind zur Ladungssicherung generell nicht unproblematisch, da beispielsweise bei vereisten Flächen die theoretischen Haftreibzahlen ohnehin nicht erreicht werden können. Folglich werden derartige Klemmbalken nur noch als Hilfsmittel akzeptiert.

Eine weitere Alternative ist ein sogenannter Absperrbalken mit einem am axialen Ende angeordneten Zapfen. Bei diesem System wird eine Lochschiene in das Dach des Aufbaus sowie den Boden eingebracht. Der Absperrbalken kann nun durch Formschluss über den Zapfen mit dem Boden verbunden werden. Durch geeignete Werkstoffauswahl werden derzeit Haltekräfte von bis zu 1.000 kg erreicht. Bei hintereinander angeordneten Löchern der Schienen wird gewährleistet, dass auch längere oder kürzere Ladungsteile entlang der Längsrichtung des Aufbaus gesichert werden können. Aufgrund der erhöhten Haltekraft einer derartigen Absperrstange können mehrere Ladungsträger, wie z. B. Rollcontainer oder Paletten mit nur einer einzigen oder einigen wenigen Absperrstangen gesichert werden, was den Aufwand und die Kosten minimiert.

Ein wesentlicher Nachteil dieser Lösung ist es jedoch, dass die Lochschienen am Boden und Dach zur Verwendung zwingend erforderlich sind. In der Praxis wird üblicherweise eine maximale Lochschienenanzahl vorgegeben, wobei hier typischerweise fünf entlang der Längsrichtung ausgebildete Lochschienenreihen als zweckmäßig und wirtschaftlich vertretbar verwendet werden. Mittels derartiger Lochschienen können normierte Ladungsträger, wie z. B. Europaletten oder Rollcontainer wirkungsvoll gesichert werden. Typischerweise werden Rollcontainer dabei quer eingeschoben, so dass diese über die Bockrolle als nicht gelenkte Rolle geschoben werden müssen, was einerseits einen erhöhten Aufwand bedeutet, jedoch andererseits den zur Verfügung stehenden Raum der Ladefläche besser nutzt.

Aus der DE 202 18 023 U1 ist ein Ladungssicherungssystem bekannt, das ein balkenartiges Profil aufweist, bei dem in einem Sockelrohr ein Innen- oder Stellrohr in der als Klemmbalken gestalteten Vorrichtung stufenweise axial verschoben werden kann. An beiden Enden des Profils befinden sich Zapfen, die in dafür vorgesehenen Vertiefungen, die im Laderaum oder an Transportbehältern eingebracht sind, eingesteckt werden. Zur Fixierung der Vorrichtung wird diese über das Herausziehen des Stellrohrs soweit verlängert, bis die Zapfen jeweils zwischen den Flächen vorzugsweise in der Vertiefung anstoßen und die Vorrichtung verklemmt ist.

Aus der DE 10 2008 048 581 A1 ist eine Vorrichtung zum Halten und Sichern von Ladegut in Form einer Sperrstange bekannt, wobei in einem Außenrohr ein Innenrohr axial verschiebbar angeordnet ist und über eine Rasteinrichtung arretierbar ist, wobei in zumindest einem Ende der Stange ein Zapfen sitzt, der sich gegen ein Kraftspeicherelement abstützt.

Aus der DE 20 2005 011 556 U1 ist ein Laderaumsystem bekannt, das zumindest ein Ladeelement aufweist, das in gegenüberliegend angeordneten Führungselementen gelagert ist, wobei die Führungselemente in wenigstens zwei Richtungen eines Laderaums verlaufend angeordnet sind, wobei den Führungselementen zumindest ein Weichenelement derart zugeordnet ist, dass das Führungselement, welches in der einen Richtung verläuft, mit dem Führungselement, welches in der anderen oder gleichen Richtung verläuft, verbindbar ist, so dass das Ladeelement demontagefrei aus dem einen Führungselement in das andere Führungselement überführbar ist.

Aus der WO 2009/036928 A1 ist eine Haltevorrichtung bekannt, die in einem Fahrzeuginnenraum montierbar ist. Die Vorrichtung enthält mindestens eine Haltestrebe mit einer längeneinstellbaren Stangenstruktur und zwei stirnseitig daran angebrachten plattenförmigen Stützgliedern. Durch je eine Haftverschlusseinrichtung können die Stützglieder an den Fahrzeugwänden fixiert werden.

Aus der DE 10 2015 106 954 A1 ist ein Sperrbalken mit lageveränderbaren Profilen bekannt, die sich zwischen sich gegenüberliegenden Elementen erstrecken, an denen die Profile festlegbar sind, wobei ein mittleres Profil vorgesehen ist, gegenüber dem jeweils endwertig je ein weiteres Profil lageveränderbar angeordnet ist.

Aus der DE 1 781 124 ist eine Vorrichtung zum Abstützen von Ladungen bekannt, wobei eine Stützstrebe und eine Stützplatte vorgesehen sind, von denen die Strebe in an gegenüberliegenden Wänden des Fahrzeugs oder Behälters fest angebrachten, aufeinander abgestimmten, mit Löchern versehenen Schienen herausnehmbar angebracht ist.

Aus der DE 10 2016 008 424 A1 ist ein Rundzapfenteil für die Bodenbefestigung eines Ladungssicherungsbalkens in einer Befestigungsschiene, insbesondere einer Airline-Schiene des Ladebodens eines Lastraums bekannt. Aus der DE 10 2015 106 954 A1 ist ein Sperrbalken bekannt, der lageveränderliche Profile aufweist, die zwischen zwei stirnseitigen Abschlüssen gegenübereinander entlang der Längsachse des Sperrbalkens verschoben werden können, um den Sperrbalken in seiner Länge an einen Laderaum anpassen zu können.

Aus der DE 10 2004 011 003 A1 ist ein Rückhaltesystem zur Ladungssicherung bekannt, bei dem eine Sperrsäule in Lochrasterschienen in einem Fahrzeugaufbau mittels eines Zentralhebels arretiert werden kann.

Die DE 10 2004 011 003 A1 zeigt die Ladungssicherung bei Fahrzeugen durch ein variabel einsetzbares Sperrsystem.

Demnach wird das Rundzapfenteil mit einem Ausreißschutz versehen, in dem das Rundzapfenteil eine Ringnut aufweist, in welcher Querstege der Airline-Schiene stets hineindrängen, falls der Ladungssicherungsbalken droht aus der Airline-Schiene herausgerissen zu werden.

Ausgehend von diesem Stand der Technik hat sich der Erfinder nun die Aufgabe gestellt, eine Vorrichtung zur Ladungssicherung zu schaffen, die auf einfache Weise an unterschiedlich dimensionierte Ladungsträger angepasst werden kann.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Vorrichtung zur Ladungssicherung, insbesondere mittels vertikaler Absperrung in einem Kühlfahrzeugaufbau, geschaffen, die ein erstes Stangenelement und ein mittels eines Spannmechanismus entlang einer axialen Richtung verschiebbares zweites Stangenelement umfasst, wobei das erste Stangenelement entlang einer ersten Richtung, die senkrecht zur axialen Richtung angeordnet ist, eine erste Außenfläche in einem ersten Abstand zur axialen Richtung aufweist und entlang einer von der ersten Richtung verschiedenen zweiten Richtung, die senkrecht zur axialen Richtung und mit der ersten Richtung eine Ebene bildend angeordnet ist, eine zweite Außenfläche in einem zweiten Abstand aufweist, wobei das erste Stangenelement und das zweite Stangenelement in Längsschienen arretierbar sind und Ladungsgut unterschiedlicher Abmessungen entweder über die erste Außenfläche oder die zweite Außenfläche gesichert ist. Die erste Außenfläche überdeckt das erste Stangenelement im Wesentlichen vollständig. Die zweite Außenfläche ist am axialen Ende in Richtung der Längsschiene am ersten Stangenelement ausgebildet und überdeckt dieses vorzugsweise in einem Endabschnitt.

Demnach wird gemäß der Erfindung eine Vorrichtung zur Ladungssicherung geschaffen, die beispielsweise als vertikale Absperrstange in Kühlfahrzeugaufbauten verwendet werden kann. Dazu wird die Vorrichtung auf fachübliche Weise in Längsschienen arretiert, wobei am ersten Stangenelement zwei Außenflächen angeordnet sind, die zur axialen Richtung, d. h. zur Längsachse der Absperrstange verschiedene Abstände aufweisen. Somit kann durch Auswahl entweder der ersten oder der zweiten Außenfläche Ladungsgut gesichert werden das unterschiedliche Außenabmessungen aufweist. So kann beispielsweise die erste Außenfläche dazu eingesetzt werden, normierte Ladungsträger, wie z. B. Europaletten oder Rollcontainer zu sichern. Diese weisen standardisierte Außenabmessungen auf, so dass z. B. bei einer Europalette mit 1.200 x 800 mm und Rollcontainer mit circa 810 x 710 mm eine wirkungsvolle Absicherung erreicht werden kann, wobei letztere dazu quer eingeschoben werden. Bezüglich ihrer Außenabmessungen werden bei Rollcontainern je nach Typ oder Hersteller auch Abweichungen im Bereich einiger Zentimeter beobachtet. Falls jedoch Ladungsgut mit anderen Abmessungen oder Rollcontainer in Längsrichtung eingeschoben werden, kann die erste Außenfläche nicht mehr als Abstützung zur Ladungssicherung dienen. Die Erfindung sieht nun vor, dass die Vorrichtung nun in eine zweite Richtung gedreht werden kann, so dass die zweite Außenfläche als Absicherung für das Ladungsgut herangezogen werden kann. Demnach ist es möglich, auch nicht den Standardmaßen entsprechende Ladungsträger oder in Längsrichtung eingeschobene Rollcontainer wirkungsvoll abzusichern, ohne dabei auf andere oder zusätzliche Sicherungsmaßnahmen vertrauen zu müssen, die oftmals bei der Auslieferung von Waren nicht vorhanden sind oder extra mitgeführt werden müssten. Am Beispiel der Rollcontainer wird deutlich, dass die zweite Außenfläche ca. 100 mm zusätzlich überbrücken muss, so dass nun der Rollcontainer mit der Außenabmessung von 710 mm gesichert werden kann. Dies ist insbesondere bei Kühlfahrzeugen vorteilhaft, da nun die Zahl der Längsschienen im Boden bzw. der Decke des Kühlfahrzeugs nicht zusätzlich erhöht werden muss, um Waren ausliefern zu können, die mit nicht standardisierten Maßen im Inneren eines Kühlfahrzeugaufbaus gesichert werden müssen.

Der erste Abstand kann dabei geringer als der zweite Abstand sein, wobei insbesondere die erste Außenfläche das erste Stangenelement im Wesentlichen vollständig überdeckt.

Als erste Außenfläche wird gemäß diesen Ausführungsformen der Grundkörper des ersten Stangenelements verwendet, so dass die erste Außenfläche mit einer Oberfläche des ersten Stangenelements identisch ist.

Die zweite Außenfläche ist am axialen Ende in Richtung der Längsschiene am ersten Stangenelement ausgebildet und überdeckt dieses vorzugsweise in einem Endabschnitt.

Demnach ist die zweite Außenfläche nur in einem Teilbereich des ersten Stangenelements gebildet, wobei hier insbesondere bei der Verwendung mit Rollcontainern derjenige Bereich in Betracht kommt, der ein Bodenelement oberhalb der Lenk- bzw. Bockrollen des Rollcontainers überdeckt. Auf diese Weise wird eine zuverlässige Sicherung mittels der zweiten Außenfläche erreicht.

Die erste Richtung und die zweite Richtung können in unterschiedlichen Winkelstellungen zueinander ausgerichtet sein. Somit ist es möglich, die entsprechende Außenfläche zur Ladungssicherung durch ein Drehen der Vorrichtung um ihre Längsachse auszuwählen.

Bezüglich der unterschiedlichen Winkelstellungen sind mehrere Varianten denkbar. So ist es zum einen vorgesehen, dass unterschiedliche Winkelstellungen kontinuierlich wählbar sind. Dazu könnte die zweite Außenfläche als Seitenfläche einer zylindrisch geformten Exzenterscheibe und die erste Außenfläche als Kreissegment an der Exzenterscheibe gebildet sein.

Demnach kann die Vorrichtung radial solange verdreht werden, bis sich die Exzenterscheibe bündig am Ladungsgut anschließt. Durch die Exzenterscheibe und die daraus folgende Krafteinleitung im rechten Winkel zur Fläche und zum Mittelpunkt der Verankerung in der Längsschiene wird ein Rückstellmoment verhindert, so dass die in eine bündige Stellung gedrehte Vorrichtung in dieser Position verbleibt.

Zum anderen kann auch die erste Richtung und die zweite Richtung senkrecht zueinander gebildet sein, wobei vorzugsweise entlang einer dritten Richtung, die entgegen gesetzt zur zweiten Richtung angeordnet ist, eine dritte Außenfläche angeordnet ist, die einen dritten Abstand zur axialen Richtung aufweist, der vom zweiten Abstand verschieden gewählt sein kann. Aufgrund dieser Vorgehensweise ist es möglich, die Vorrichtung durch Verdrehen um 90°, 180° bzw. 270° an unterschiedliche Außenabmessungen anzupassen. In der Variante mit der dritten Außenfläche kann somit eine Vorkehrung getroffen werden, neben standardisierten Außenabmessungen auch Ladungsgut mit einer ersten abweichenden und einer zweiten abweichenden Form zu transportieren.

Falls die Absicherung lediglich in einem Endabschnitt am ersten Stangenelement nicht für ausreichend Stabilität sorgt, kann es vorgesehen sein, gegenüberliegend zum Endabschnitt am ersten Stangenelement in zweiter Richtung ein Bügelelement anzubringen, das eine Anlagefläche aufweist, die im zweiten Abstand angeordnet sein kann. Demnach wird das Ladungsgut nicht nur im Endabschnitt sondern auch auf der gegenüberliegenden Seite entsprechend gesichert. Hierbei ist es insbesondere auch möglich, dass das Bügelelement über das erste Stangenelement hinaus das zweite Stangenelement wenigstens teilweise überdeckt. Folglich kann das Bügelelement, das aufgrund der Teleskopierbarkeit der Vorrichtung lediglich am ersten Stangenelement angeordnet wird, auch den Bereich des zweiten Stangenelements überdecken. Das Bügelelement kann bezüglich seiner Anlagefläche mit dem gleichen Abstand wie die zweite Außenfläche oder auch mit einem unterschiedlichen Abstand ausgebildet sein, so dass hier eine zusätzliche Anpassung an individuelle Erfordernisse möglich ist. Beim Transport von Rollcontainern würde das Bügelelement eine zusätzliche Sicherung für die seitlich üblicherweise in Form von Gittern gebildeten Wände des Rollcontainers darstellen. Somit kann erreicht werden, dass diese während der Fahrt nicht gegen die Vorrichtung schlagen bzw. mit großem Impuls gegen die Seitenwände des Kühlfahrzeugaufbaus prallen können.

Die bisher dargestellten Ausführungsformen gehen von fest angeordneten ersten bzw. zweiten Außenflächen aus. Es ist aber in anderen Ausführungsformen ebenso möglich, wenigstens eine Außenfläche bezüglich ihres Abstands zur axialen Richtung der Vorrichtung verstellbar auszuführen. Dadurch wird eine zusätzliche Anpassung möglich, so dass beliebig oder nahezu beliebig geformtes Ladungsgut individuell gesichert werden kann.

Die Verstellbarkeit der Außenfläche kann auf unterschiedliche Weisen ausgeführt sein. So ist es beispielsweise möglich, die verstellbare zweite Außenfläche mittels eines U-Profils zu bilden, das über das erste Stangenelement geschoben wird. Das die beiden Schenkel des U-Profils verbindende Mittelstück würde dabei die zweite Außenfläche bilden. Hierbei kann das erste Stangenprofil rechteckförmig ausgebildet sein, dessen Abmessungen so gewählt werden, dass das U-Profil mit den beiden Schenkeln über das rechteckförmige Profil geschoben werden kann und beispielsweise mittels einer Schraube oder dergleichen in vorgegebenen oder frei wählbaren Positionen verschoben werden kann. In anderen Ausführungsformen kann die verstellbare Außenfläche als Luftkissen gebildet werden oder in Form einer Gelenkstange mit der verstellbaren Außenfläche verbunden sein.

Desweiteren ist es vorgesehen, dass das erste Stangenelement und das zweite Stangenelement an ihren gegenüberliegenden Enden mit einem Zapfen versehen sind, die in die vorzugsweise am Boden oder an der Decke als Airline-Schienen ausgebildeten Längsschienen eingreifen. Dabei kann im Bereich des Zapfens am ersten oder am zweiten Stangenelement eine Verdrehsicherung angeordnet sein.

Insbesondere bei einer Ausführungsform, bei der die erste und die zweite Außenfläche in vorgegebenen Winkelpositionen zueinander angeordnet sind, kann es vorteilhaft sein, die Ladungssicherungsstange bezüglich einer der beiden Außenflächen mit einer Verdrehsicherung auszustatten, so dass die einmal in Position gebrachte Vorrichtung nicht mehr verändert werden kann. Hierbei ist es beispielsweise möglich, im Zusammenspiel mit einer Airline-Schiene entlang der ersten bzw. der zweiten Richtung zusätzliche Bolzen benachbart zu den Zapfen anzubringen, so dass diese ebenfalls in die Airline-Schiene eingreifen und ein Verdrehen der Vorrichtung verhindern können. Bevorzugt wird die Verdrehsicherung nur an diejenigen Zapfen ausgebildet, der am Boden des Kühlfahrzeugaufbaus in eine Längsschiene eingreift. Die Zapfen am ersten und zweiten Stangenelement können auch beabstandet zur axialen Richtung ausgerichtet sein, wodurch je nach Orientierung der Vorrichtung eine weitere Anpassbarkeit gegeben ist, was beispielsweise bei überladenen Paletten mit vorgewölbten Ladungsbestandteilen vorteilhaft ist, da nun geringfügig zusätzlicher Abstand zum Ladungsgut geschaffen wird.

Nachfolgend werden einige Ausführungsbeispiele anhand der Zeichnung näher erläutert. Es zeigen:
- Fig. 1: eine erfindungsgemäße Vorrichtung zur Ladungssicherung gemäß einer ersten Ausführungsform in einer Seitenansicht,
- Fig. 2: ein Schnitt durch die erfindungsgemäße Vorrichtung aus Fig. 1,
- Fig. 3A: die Vorrichtung aus Fig. 1 zusammen mit Ladungsgut,
- Fig. 3B: die Vorrichtung aus Fig. 1 zusammen mit Ladungsgut,
- Fig. 4: ein Detail der erfindungsgemäßen Vorrichtung aus Fig. 1,
- Fig. 5: eine weitere Ausführungsform der erfindungsgemäßen Vorrichtung in einer schematischen Seitenansicht,
- Fig. 6: eine weitere Ausführungsform der erfindungsgemäßen Vorrichtung in einer schematischen Seitenansicht,
- Fig. 7: eine weitere Ausführungsform der erfindungsgemäßen Vorrichtung in einer Draufsicht, und
- Fig. 8: eine weitere Ausführungsform der erfindungsgemäßen Vorrichtung in einer Draufsicht.

In den Figuren sind gleiche oder funktional gleich wirkende Bauelemente mit den gleichen Bezugszeichen versehen.

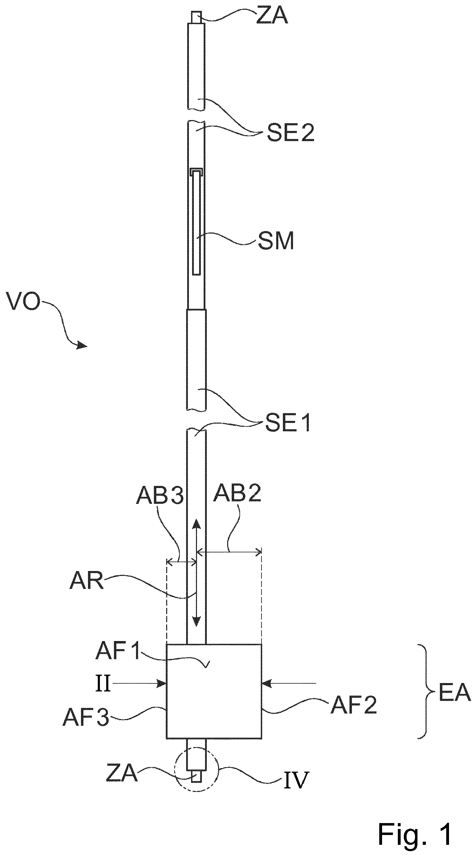

In Fig. 1 ist eine erste Ausführungsform einer erfindungsgemäßen Vorrichtung VO zur Ladungssicherung gezeigt. Diese Vorrichtung kann als vertikale Absperrstange in einem Kühlfahrzeugaufbau verwendet werden. Die Vorrichtung VO umfasst ein erstes Stangenelement SE1 und ein zweites Stangenelement SE2, die entlang einer axialen Richtung AR ausgerichtet und verschiebbar sind. Dazu kann ein Spannmechanismus SM verwendet werden, so dass die Position des zweiten Stangenelements SE2 bezüglich des ersten Stangenelements SE1 festgelegt werden kann. Der Spannmechanismus SM ist nicht Gegenstand dieser Erfindung und wird typischerweise so wie in einer der eingangs genannten Druckschriften ausgebildet werden. An den gegenüberliegenden Enden sind das erste Stangenelement SE1 und das zweite Stangenelement SE2 jeweils mit einem Zapfen ZA versehen, die in Längsschienen (nicht in Fig. 1 gezeigt) des Kühlfahrzeugaufbaus eingebracht werden können.

Die in Fig. 1 gezeigte Vorrichtung VO kann beispielsweise mit rechteckförmigen Profilen gebildet werden, die für das erste Stangenelement SE1 und das zweite Stangenelemente SE2 verwendet werden. Somit umfasst die Vorrichtung VO auf den mit der Zeichenebene zusammenfallenden Außenflächen am ersten Stangenelement SE1 eine erste Außenfläche AF1. Bevorzugt ist der Spannmechanismus SM in der Ebene der ersten Außenfläche AF1 angeordnet. Desweiteren sind in einem Endabschnitt EA, der benachbart zum unteren Zapfen ZA am ersten Stangenelement SE1 ausgebildet ist, eine zweite Außenfläche AF2 vorgesehen, die in einem zweiten Abstand AB2 zur axialen Richtung AR gebildet ist. Der erste Abstand der ersten Außenfläche AF1 entspricht dabei den Abmessungen des rechteckförmigen Profils, das zur Herstellung des ersten Stangenelements SE1 verwendet wurde. Gegenüberliegend zur zweiten Außenfläche AF2 kann in einem dritten Abstand AB3 eine dritte Außenfläche AF3 gebildet sein. Die dritte Außenfläche AF3 kann aber auch identisch zur zweiten Außenfläche AF2 oder identisch zur ersten Außenfläche AF1 gebildet sein. Bei der in Fig. 1 gezeigten Ausgestaltung der Vorrichtung VO lässt sich somit im Endabschnitt EA Ladungsgut mit unterschiedlichen Außenabmessungen sichern, wobei durch Drehen um 90° bzw. 270° entweder die zweite Außenfläche AF2 oder die dritte Außenfläche AF3 zur Ladungssicherung verwendet werden kann. Ohne Drehung bzw. bei Drehung um 180° kann die erste Außenfläche AF1 zur Ladungssicherung verwendet werden. Folglich ergibt sich aufgrund der erfindungsgemäßen Vorrichtung eine einfache Anpassbarkeit auf unterschiedlich geformtes Ladungsgut, so dass durch entsprechendes Drehen der Vorrichtung VO die jeweils passende Außenfläche AF1, AF2 oder AF3 ausgewählt werden kann.

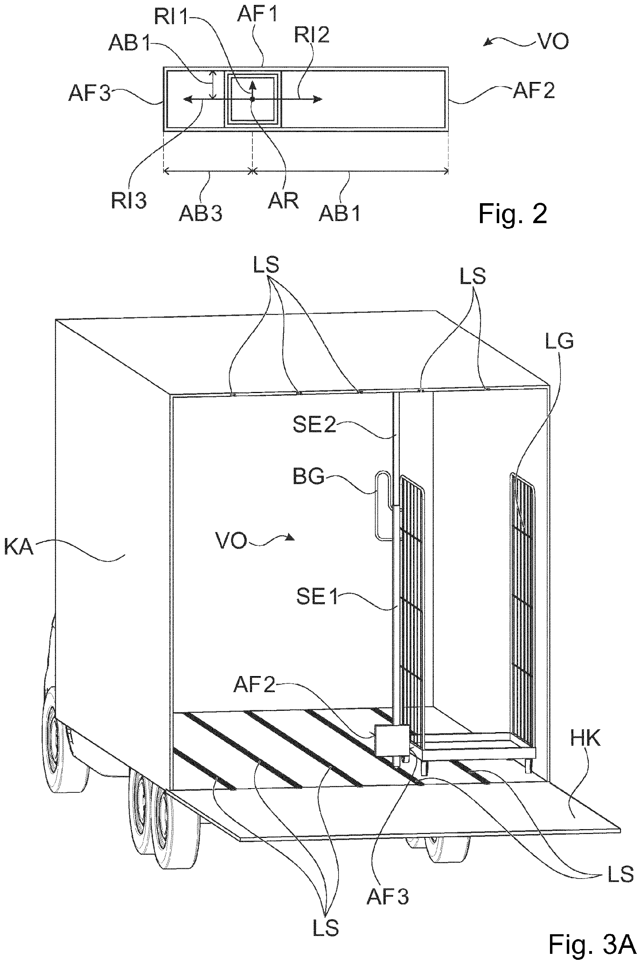

In Fig. 2 ist die erfindungsgemäße Vorrichtung VO nochmals in einer Schnittansicht gezeigt, die senkrecht zur axialen Richtung AR und zur Blattebene gewählt wurde. Man erkennt, dass die erste Außenfläche AF1 entlang einer ersten Richtung RI1 in einem ersten Abstand AB1 zur axialen Richtung AR ausgebildet ist. Die zweite Außenfläche AF2 ist in einem zweiten Abstand AB2 in einer zweiten Richtung RI2 von der axialen Richtung AR beabstandet. Die dritte Außenfläche AF3 ist in einem dritten Abstand AB3 entlang einer dritten Richtung RI3 von der axialen Richtung AR beabstandet. Die erste Richtung RI1 ist dabei senkrecht zur zweiten Richtung RI2 gewählt, die wiederum gegenüberliegend zur dritten Richtung RI3 angeordnet ist.

In Fig. 3A ist die erfindungsgemäße Vorrichtung VO bei der Anwendung zusammen mit Ladungsgut LG in einem Kühlfahrzeugaufbau KA gezeigt. Der Kühlfahrzeugaufbau KA ist beispielhaft über eine Heckklappe HK be- und endladbar. Im gezeigten Beispiel ist lediglich ein einzelner Rollcontainer als Ladungsgut LG zur Verdeutlichung dargestellt. Es versteht sich jedoch von selbst, dass eine Vielzahl anderer Lademöglichkeiten existiert, die von der erfindungsgemäßen Vorrichtung VO abgedeckt werden.

Man erkennt, dass im Endabschnitt EA das in Form des Rollcontainers ausgebildete Ladungsgut LG mittels der dritte Außenfläche AF3 gesichert wird. Der Rollcontainer wurde hierbei in Längsrichtung in den Innenraum des Kühlfahrzeugaufbaus KA geschoben. Somit weist das Ladungsgut LG typischerweise eine Breite von circa 710 mm auf, so dass eine konventionelle Absperrstange nicht verwendet werden kann, sofern die Längsschienen LS so ausgebildet werden, dass diese eine Unterteilung in einem vorgegebenen Raster folgen, das typischerweise dem Einbringen von Europaletten bzw. Rollcontainer im Quereinschub folgt. Die erfindungsgemäße Vorrichtung ermöglicht es nun, das Ladungsgut LG mit nicht standardisierten Außenabmessungen oder in einer anderen Orientierung zu sichern, so dass darüber hinaus bereits bei der Herstellung des Kühlfahrzeugaufbaus keine Notwendigkeit besteht, über die im Standardmaß hinaus ohnehin vorgesehenen Längsschienen LS weitere Längsschienen anzubringen, um Nicht- Standard-Außenabmessungen sichern zu können. Die dritte Außenfläche AF3 weist daher einen Abstand AB3 zu der die Symmetrieachse bildenden axialen Richtung AR auf, der den Zwischenraum zwischen der verwendeten Längsschienen LS und der Außenseite des Ladungsguts LG überbrückt.

Desweiteren ist gemäß dieser Vorgehensweise keine Absicherung eines einzelnen Rollcontainers an der Seitenwand des Kühlfahrzeugaufbaus KA mehr notwendig. Hierzu sind aus dem Stand der Technik unterschiedliche Systeme bekannt, die typischerweise eine Sicherung mit zusätzlich mitzuführenden Objekten wie Spannhebel, Spannriemen oder dergleichen erfordern. Dies wird jedoch in der Logistik als nachteilig angesehen, da das Bereitstellen derartiger Objekte mit zusätzlichem Aufwand verbunden ist und darüber hinaus auch relativ einfach verlegt oder entwendet werden können.

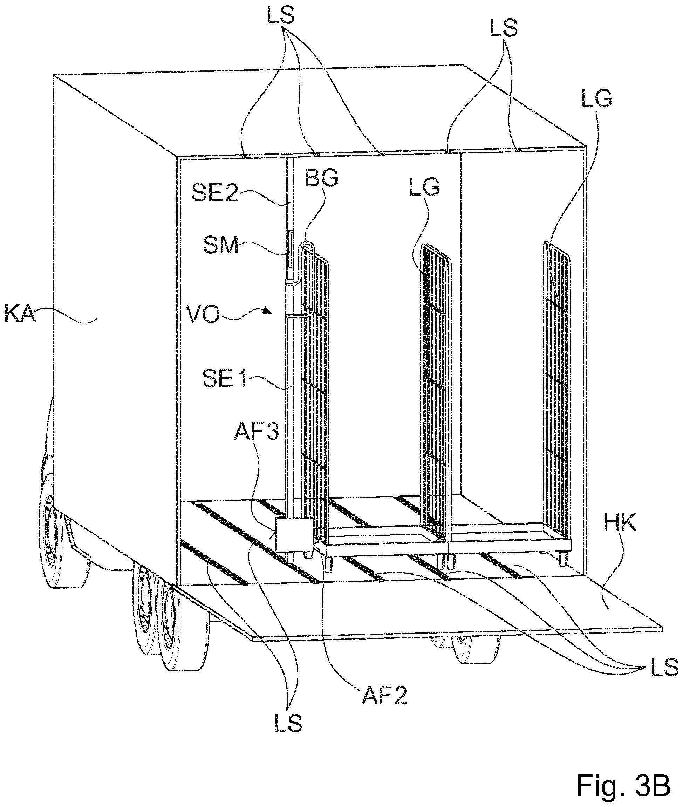

In Fig. 3B ist eine Beladesituation mit zwei Rollcontainern als Ladungsgut LG gezeigt, die nebenander angeordnet sind und ebenfalls in Längsrichtung in den Innenraum des Kühlfahrzeugaufbaus KA geschoben worden. Das Ladungsgut LG wird im Endabschnitt EA das mittels der zweiten Außenfläche AF2 gesichert, wobei der Abstand AB2 nun größer als der dritte Abstand AB3 gewählt ist, um den Zwischenraum zwischen der verwendeten Längsschienen LS und der Außenseite des Ladungsguts LG zu überbrücken. Zusätzlich zur Sicherung im Endabschnitt EA ist in Fig. 3B gezeigt, dass am ersten Stangenelement SE1 am gegenüberliegenden Ende eine zusätzliche Sicherung mit einem Bügelelement BG erreicht werden kann. Das Bügelelement BG weist dabei eine Anlagefläche AN auf, die im gezeigten Beispiel dem zweiten Abstand AB2 entspricht, so dass die Anlagefläche AN und die zweite Außenfläche AF2 im Wesentlichen eine Ebene bilden können. Das Bügelelement BG sichert dabei den gitterförmigen Seitenwandaufbau des Rollcontainers. Das Bügelelement BG ist dabei so ausgebildet, dass es auch am zweiten Stangenelement SE2 den unmittelbar benachbarten Bereich überdeckt. In anderen Ausführungsformen wäre es aber auch möglich, das Bügelelement BG beispielsweise am zweiten Stangenelement SE2 beispielsweise im Bereich seines oberen Endes im Bereich des Zapfens ZA anzuordnen. Desweiteren kann auch auf der gegenüberliegenden Seite im dritten Abstand AB3 ein weiteres Segment des Bügelelements BG angebracht sein.

Die erfindungsgemäße Vorrichtung VO vereinfacht somit auch die Ausgestaltung des Kühlfahrzeugaufbaus KA und reduziert den Aufwand bei der Ausstattung der Fahrzeuge, so dass beispielsweise ein Logistikunternehmen bei unterschiedlich geformten Ladungsgütern dennoch den gleichen Kühlfahrzeugaufbau KA wählen kann. Neben der Verwendung der Vorrichtung VO mit Rollcontainern kommt auch ein Einsatz bei Paletten oder anderen Behältern in Frage, wobei beispielhaft Transportwagen bei der Cook-And-Chill-Versorgung d.h. bei dem Transport mit gekühlten Speisen von einem Zentralbetrieb aus zum Zwecke der Gemeinschaftsverpflegung genannt sei.

Bei einem typischen Beladen des Kühlfahrzeugaufbaus KA würde beispielsweise bei einer Auslieferung von einem Lager aus zunächst das Innere des Kühlfahrzeugaufbaus KA so beladen werden, dass die Rollcontainer als Ladungsgut LG in Querrichtung eingeschoben werden. In Querrichtung sind die nicht drehbaren Bockrollen des Rollcontainers quer zur Verschieberichtung angeordnet, wobei die Rollcontainer entlang dieser Richtung eine Länge aufweisen, die, wie bereits eingangs erwähnt, ca. 810 mm beträgt. Folglich können im Inneren des Kühlfahrzeugaufbaus KA drei Rollcontainer direkt nebeneinander liegend eingebracht werden, ohne dass es einer seitlichen Sicherung bedarf. Nach hinten können die Rollcontainer durch die erfindungsgemäße Vorrichtung VO gesichert sein, die in diesem Fall etwa mittig angebracht wird und beispielsweise mittels der ersten Anlagefläche AF1 ein Verrutschen der Ladung verhindert. Alternativ kann selbstverständlich auch eine konventionelle Absperrstange oder auch eine Querstange verwendet werden. Nachdem nun am ersten Zielort ein erster Rollcontainer entfernt wurde, werden die beiden verbleibenden Rollcontainer von ihrer Querposition in eine Längsposition gebracht, so dass ein Zustand erreicht wird, bei dem die erfindungsgemäße Vorrichtung VO eine seitliche Absicherung der beiden verbleibenden Rollcontainer schafft, wie in Fig. 3B gezeigt ist. Bei Entfernen eines weiteren Rollcontainers ergibt sich dann eine Situation, wie sie in der Fig. 3A dargestellt wurde, so dass die erfindungsgemäße Vorrichtung VO den einzelnen verbleibenden Rollcontainer sichert.

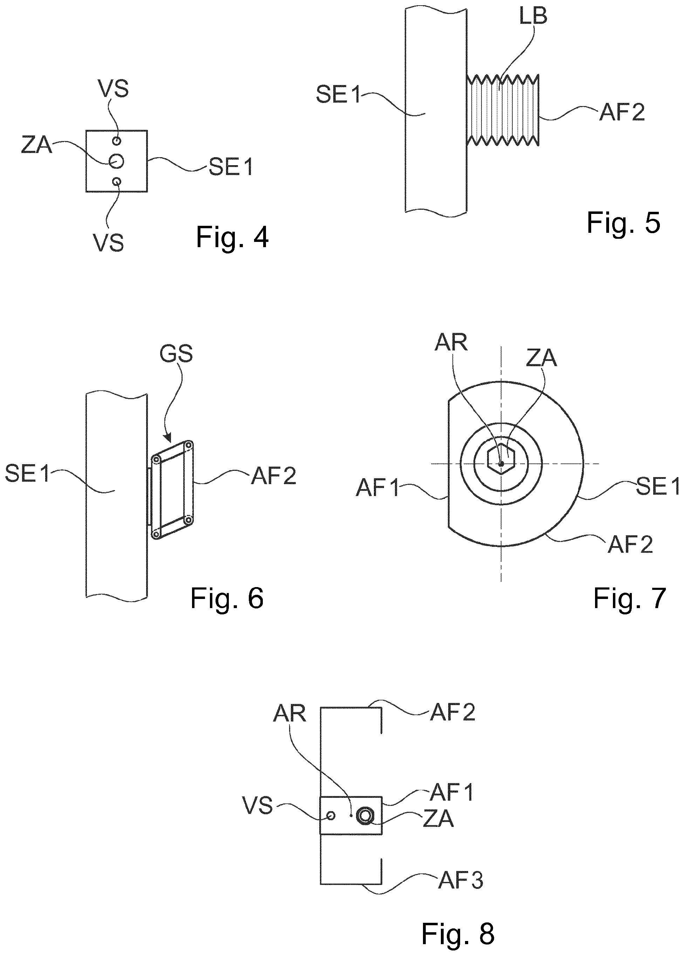

Für die Längsschienen LS können beispielsweise sogenannte Airline-Schienen verwendet werden, bei denen entlang der Längsrichtung eine durchgehende Nut angebracht ist, die in regelmäßigen Abständen mit entsprechenden Löchern versehen sind. In diese Löcher können der Zapfen ZA eingebracht werden. Wie in Fig. 4 gezeigt ist, kann darüber hinaus eine Verdrehsicherung VS vorgesehen sein, die beispielsweise in Form von Bolzen ausgeführt ist, so dass diese in die entlang der Längsrichtung der Längsschienen ausgebildete Nut eingeführt werden können, so dass über die Verdrehsicherung VS beispielsweise die Anordnung der Vorrichtung VO zur Auswahl der ersten Außenfläche AF1 vorgegeben ist. Die Bolzen der Verdrehsicherung VS werden dabei in geringerer Höhe als der Zapfen ZA ausgebildet, so dass diese bei einer Verdrehung um 90° bzw. 270° neben der in Längsrichtung gebildeten Nut auf der Längsschiene LS aufliegen. Neben der Auswahl der ersten Außenfläche AF1 können selbstverständlich auch die zweite Außenfläche AF2 bzw. die dritte Außenfläche AF3 durch die Verdrehsicherung VS vorgegeben sein. Die Bolzen der Verdrehsicherung VS können folglich sowohl entlang der ersten Richtung RI1 als auch entlang der zweiten Richtung RI2 in einer Reihe mit dem Zapfen ZA angeordnet werden.

Bevorzugt ist es jedoch, den oder die Bolzen der Verdrehsicherung VS entlang der ersten Richtung RI1 anzuordnen. Die Verdrehsicherung VS ist folglich dann aktiv, wenn die Vorrichtung VO so orientiert ist, dass die zweite Außenfläche AF2 bzw. die dritte Außenfläche AF3 auf gegenüberliegenden Seiten der Längsschiene LS orientiert sind. In dieser Position ist die Verdrehsicherung VS hilfreich, da sie bei Be- und Entladevorgängen ein versehentliches Drehen der Vorrichtung VO durch Berühren der querlegenden Bauteile im Endabschnitt EA verhindert.

In Fig. 5 ist eine weitere Ausführungsform der erfindungsgemäßen Vorrichtung VO in einer schematischen Seitenansicht gezeigt. Im Unterschied zur bisher gezeigten Ausführungsform ist hier die zweite Außenfläche AF2 veränderbar ausgebildet, wobei die zweite Außenfläche AF2 hier in Form eines Luftbalgs LB mit variablem Abstand zum ersten Stangenelement SE1 gebildet wird. Zur Befüllung des Luftbalgs LB kann eine separate Pumpe verwendet werden, die entweder in der Vorrichtung VO integriert werden kann oder aber über entsprechende Schläuche, beispielsweise von einer Dachposition aus, eine Luftzufuhr ermöglichen kann. Desweiteren ist es denkbar, auf den Druckluftvorrat des Fahrzeugs zurückzugreifen, was insbesondere bei Fahrzeugen des Güterverkehrs problemlos möglich ist.

Eine weitere Ausführungsform der Erfindung ist in Fig. 6 gezeigt. Hier wird die zweite Anlagefläche AF2 ebenso verstellbar ausgeführt, wobei die Verstellbarkeit hier über eine Getriebestangenanordnung GS erreicht wird. Hierbei sind parallel zueinander geführte Stangen über Querelemente drehbar verbunden, so dass die zweite Anlagefläche AF2 bezüglich ihres Abstands zum ersten Stangenelement SE1 variabel ist. Über entsprechende Sicherungen (nicht in Fig. 6 gezeigt), kann die einmal eingestellte Position der zweiten Außenfläche AF2 an den Getriebestangen GS arretiert werden.

Eine Verstellbarkeit der Außenflächen AF2 bzw. AF3 ist auch in der in Fig. 1 gezeigten Ausgestaltung möglich, wobei hier die zweite Außenfläche AF2 von einem Mittelabschnitt eines U-Profils gebildete wird, so dass dessen Schenkel über die ersten Außenflächen AF1 am ersten Stangenelement SE1 geschoben werden können. Durch eine entsprechende Arretierung, beispielsweise in Form einer Schraube, kann an beliebigen oder vorher festgelegten Positionen eine Variabilität bezüglich der zweiten Außenfläche AF2 erreicht werden. Auf der gegenüberliegenden Seite ist selbstverständlich bezüglich der dritten Außenfläche AF3 ebenso eine Verstellbarkeit mittels eines U-Profils möglich.

In den bisher gezeigten Ausführungsformen gemäß Fig. 1 bis 6 sind die Außenflächen AF1, AF2 und AF3 jeweils in unterschiedlichen Winkelpositionen zueinander ausgerichtet. In der in Fig. 7 gezeigten Ausführungsform ist es nunmehr möglich, unterschiedliche Winkelstellungen kontinuierlich auszuwählen. Hierzu wird die zweite Außenfläche AF2 als Seitenfläche einer zylindrischen Exzenterscheibe gebildet, während die erste Außenfläche AF1 als Planfläche eines segmentartigen Einschnitts an der Exzenterscheibe geformt wurde. Der Zapfen ZA ist dabei beabstandet zur axialen Richtung angeordnet, so dass die Vorrichtung VO solange radial verdreht werden kann, bis sich die zweite Außenfläche AF2 bündig an das Ladungsgut anschmiegt. Aufgrund der Krafteinleitung im rechten Winkel zur zweiten Außenfläche AF2 und zum Mittelpunkt des Zapfens ZA wird ein Rückstellmoment der Vorrichtung VO verhindert, so dass diese einmal in Position gebracht dort verharrt.

Die erfindungsgemäße Vorrichtung ermöglicht es, eine Antastbarkeit an unterschiedlich dimensioniertes Ladungsgut zu schaffen, indem diese im Querschnitt unterschiedliche Abmessungen aufweist, so dass ausgewählt werden kann, entlang welcher Orientierung eine Ladungssicherung erreicht werden soll. Somit kann auch ausgewählt werden, ob in Längsrichtung oder seitlich Ladung gesichert werden soll. Üblicherweise ist es von Vorteil, wenn eine Vorrichtung zur Ladungssicherung in Längsrichtung eine möglichst große Haltekraft aufweist. Demnach können mehrere Ladungsträger hintereinander mit nur einer Vorrichtung VO gesichert werden. In Querrichtung, d. h. durch seitliches Sichern beispielsweise mittels der zweiten Außenfläche AF2 ist ein an das Ladungsgut anzupassender, variabler Querschnitt von Vorteil, um den gewünschten Formschluss mit dem Ladungsgut zu erreichen. Somit würde eine Vorrichtung zur Ladungssicherung geschaffen, die bei abweichenden Abmessungen von Ladungsgut eine formschlüssige und schnell zu installierende Lösung bereitstellt.

In Fig. 8 ist eine weitere Ausführungsform der erfindungsgemäßen Vorrichtung gezeigt. Die Darstellung ist dabei wiederum von unten als Draufsicht gewählt. Man erkennt, dass der Zapfen ZA aus der eine Symmetrieachse der Vorrichtung bildenden axialen Richtung versetzt ist, wobei dieser Versatz entlang der ersten Richtung gewählt ist, so dass der Zapfen ZA zwischen dem Punkt der axialen Richtung AR und der ersten Außenfläche AF1 angeordnet ist. Bezüglich der Ausgestaltung der zweiten Außenfläche AF2 und der dritten Außenfläche AF3 wird hier eine Ausführungsform gezeigt, bei der die Sicherung beispielsweise mittels eines mehrfach gekanteten Werkstücks auf einfache Weise hergestellt werden kann. Zur Befestigung am ersten Stangenelement können beispielsweise mehrere Bohrlöcher ausgebildet sein, so dass der Abstand entsprechend einstellbar ist. Ebenfalls in Fig. 8 ist zu erkennen, dass die Verdrehsicherung VS mit dem Zapfen ZA und dem Schnittpunkt der axialen Richtung AR eine Linie bildet. Die Verdrehsicherung VS ist daher dann aktiviert, wenn die Vorrichtung so wie in Fig. 3A bzw. 3B orientiert ist. Die erste Anlagefläche AF1 kann jedoch bei dieser Ausführungsform bevorzugt zum Sichern von Paletten verwendet werden, da diese nun beim Einbringen in eine Längsschiene mittels des Zapfens ZA im Vergleich zu konventionellen Absperrstangen etwas vom Ladungsgut entfernt angeordnet ist, was dadurch erreicht wird, dass der Zapfen ZA vom Schnittpunkt der axialen Richtung AR beabstandet ist. Somit erhält ein Bediener etwas mehr Freiraum, um die Vorrichtung anzubringen. Somit lassen sich insbesondere überladene Paletten, deren Ladung etwas über die Abmessungen der Palette hinausragen, leichter sichern, da zwischen der ersten Außenfläche AF1 und dem Ladungsgut zusätzlicher Platz besteht. Die Verdrehsicherung VS wurde in diesem Fall außerhalb des geöffneten Mittenbereichs der Längsschiene zu liegen kommen, so dass der Zapfen ZA nicht vollständig in das Loch der Längsschiene geführt werden kann. Zur Sicherung der Ladung ist dies jedoch unerheblich. Um das Einführen des Zapfens ZA in die Längsschiene zu erleichtern, kann es beispielsweise vorgesehen sein, den Zapfen an seiner zur Längsschien weisenden Unterseite im Randbereich leicht anzuschrägen. Ebenso können an den Außenflächen entsprechende Markierungen vorgesehen sein, die die Position des Zapfens ZA anzeigen, so dass die Vorrichtung intuitiv durch einen Bediener richtig positioniert werden kann.

## Patentansprüche

1. Vorrichtung zur Ladungssicherung, insbesondere mittels vertikaler Absperrung in einem Kühlfahrzeugaufbau, die ein erstes Stangenelement (SE1) und ein mittels eines Spannmechanismus (SM) entlang einer axialen Richtung (AR) verschiebbares zweites Stangenelement (SE2) umfasst, wobei das erste Stangenelement (SE1) entlang einer ersten Richtung (RI1), die senkrecht zur axialen Richtung (AR) angeordnet ist, eine erste Außenfläche (AF1) in einem ersten Abstand (AB1) zur axialen Richtung (AR) aufweist und entlang einer von der ersten Richtung (RI1) verschiedenen zweiten Richtung (RI2), die senkrecht zur axialen Richtung (AR) und mit der ersten Richtung (RI1) eine Ebene bildend angeordnet ist, eine zweite Außenfläche (AF2) in einem zweiten Abstand (AB2) aufweist, **dadurch gekennzeichnet, dass** das erste Stangenelement (SE1) und das zweite Stangenelement (SE2) in Längsschienen (LS) arretierbar sind und Ladungsgut (LG) unterschiedlicher Abmessungen entweder über die erste Außenfläche (AF1) oder die zweite Außenfläche (AF2) gesichert ist, dass die erste Außenfläche (AF1) das erste Stangenelement (SE1) im Wesentlichen vollständig überdeckt und dass die zweite Außenfläche (AF2) am axialen Ende in Richtung der Längsschiene (LS) am ersten Stangenelement (SE1) ausgebildet ist und dieses vorzugsweise in einem Endabschnitt (EA) überdeckt.

2. Vorrichtung nach Anspruch 1, bei der der erste Abstand (AB1) geringer als der zweite Abstand (AB2) ist.

3. Vorrichtung nach einem der Ansprüche 1 und 2, bei der die erste Richtung (RI1) und die zweite Richtung (RI2) in unterschiedlichen Winkelstellungen zueinander ausgerichtet sind, wobei die unterschiedlichen Winkelstellungen vorzugsweise kontinuierlich wählbar sind.

4. Vorrichtung nach Anspruch 3, bei der die zweite Außenfläche (AF2) als Seitenfläche einer zylindrischen Exzenterscheibe und die erste Außenfläche (AF1) als Kreissegment an der Exzenterscheibe gebildet ist.

5. Vorrichtung nach einem der Ansprüche 1 bis 4, bei der die erste Richtung (RI1) und die zweite Richtung (RI2) senkrecht zueinander gebildet sind, wobei vorzugsweise entlang einer dritten Richtung (RI3), die entgegengesetzt zur zweiten Richtung (RI2) angeordnet ist, eine dritte Außenfläche (AF2) angeordnet ist, die einen dritten Abstand (AB3) zur axialen Richtung (AR) aufweist, der vom zweiten Abstand (AB2) verscheiden gewählt ist.

6. Vorrichtung nach einem der Ansprüche 1 bis 5, bei der gegenüberliegend zum Endabschnitt (EA) am ersten Stangenelement in zweiter Richtung ein Bügelelement (BG) angebracht ist, das eine Anlagefläche (AN) aufweist, die vorzugsweise im zweiten Abstand (AB2) angeordnet ist.

7. Vorrichtung nach Anspruch 6, bei der das Bügelelement (BG) über das erste Stangenelement (SE1) hinaus das zweite Stangenelement (SE2) wenigstens in einem Abschnitt überdeckt.

8. Vorrichtung nach einem der Ansprüche 1 bis 7, bei der wenigstens eine Außenfläche (AF1; AF2; AF3) bezüglich ihres Abstands zur axialen Richtung (AR) verstellbar ausgeführt ist.

9. Vorrichtung nach Anspruch 8, bei der die verstellbare zweite Außenfläche (AF2) mittels eines U-Profils gebildet wird, das das als ein rechteckförmiges Profil gebildetes erstes Stangenelement (SE1) über der ersten Außenfläche (AF1) umgibt, bei der die verstellbare Außenfläche als Luftkissen oder Luftbalg (LB) ausgebildet ist, oder bei der die verstellbare Außenfläche mittels einer Gelenkstange (GS) an dem ersten Stangenelement (SE1) befestigt ist.

10. Vorrichtung nach einem der Ansprüche 1 bis 9, bei der das erste Stangenelement (SE1) und das zweite Stangenelement (SE2) an ihren gegenüberliegenden Enden mit einem Zapfen (ZA) versehen sind, die in die vorzugsweise am Boden oder an der Decke als Airline-Schienen ausgebildeten Längsschienen (LS) eingreifen.

11. Vorrichtung nach Anspruch 10, bei der im Bereich des Zapfens (ZA) am ersten Stangenelement (SE1) oder am zweiten Stangenelement (SE2) eine Verdrehsicherung (VS) angeordnet ist.

12. Vorrichtung nach Anspruch 11, bei der die Verdrehsicherung (VS) aus zwei Bolzen besteht, die mit den Zapfen (ZA) entlang der ersten Richtung (RI1) oder entlang der zweiten Richtung (RI2) ausgerichtet sind.

13. Vorrichtung nach einem der Ansprüche 11 und 12, bei der der Zapfen (ZA) am ersten Stangenelement (SE1) und der Zapfen (ZA) am zweiten Stangenelement (SE2) entlang einer Achse ausgerichtet sind, die parallel und in einem Abstand zu der eine Symmetrieachse bildenden axialen Richtung (AR) ausgerichtet ist, wobei die Verdrehsicherung (VS) und der Zapfen (ZA) mit einem Schnittpunkt der axialen Richtung (AR) entlang der ersten Richtung (RI1) vorzugsweise in einer Linie angeordnet sind.

## Claims

1. Device for securing a load, in particular by means of vertical locking in a refrigerated vehicle body, which comprises a first bar element (SE1) and a second bar element (SE2) which can be displaced along an axial direction (AR) by means of a tensioning mechanism (SM), the first bar element (SE1) having a first outer surface (AF1) at a first distance (AB1) from the axial direction (AR) along a first direction (RI1) which is arranged perpendicularly to the axial direction (AR), which is arranged perpendicular to the axial direction (AR), has a first outer surface (AF1) at a first distance (AB1) from the axial direction (AR) and is arranged along a second direction (RI2), which is different from the first direction (RI1), is perpendicular to the axial direction (AR) and forms a plane with the first direction (RI1), a second outer surface (AF2) at a second distance (AB2), **characterized in that** the first bar element (SE1) and the second bar element (SE2) can be locked in longitudinal rails (LS) and cargo (LG) of different dimensions is secured either via the first outer surface (AF1) or the second outer surface (AF2), that the first outer surface (AF1) substantially completely covers the first bar element (SE1) and that the second outer surface (AF2) is formed at the axial end in the direction of the longitudinal rail (LS) on the first bar element (SE1) and preferably covers the latter in an end section (EA).

2. Device according to claim 1, wherein the first distance (AB1) is smaller than the second distance (AB2).

3. Device according to one of claims 1 and 2, wherein the first direction (RI1) and the second direction (RI2) are aligned in different angular positions relative to one another, the different angular positions preferably being continuously selectable.

4. Device according to claim 3, wherein the second outer surface (AF2) is formed as a side surface of a cylindrical eccentric disc and the first outer surface (AF1) is formed as a circular segment on the eccentric disc.

5. Device according to one of the claims 1 to 4, in which the first direction (RI1) and the second direction (RI2) are formed perpendicular to one another, wherein preferably along a third direction (RI3), which is arranged opposite to the second direction (RI2), a third outer surface (AF2) is arranged, which has a third distance (AB3) to the axial direction (AR), which is selected to be different from the second distance (AB2).

6. Device according to any one of claims 1 to 5, in which, opposite the end section (EA), a bracket element (BG) is attached to the first rod element in the second direction, which bracket element has an abutment surface (AN) which is preferably arranged at the second distance (AB2).

7. Device according to claim 6, wherein the stirrup element (BG) overlaps the second rod element (SE2) beyond the first rod element (SE1) at least in a section.

8. Device according to any one of claims 1 to 7, in which at least one outer surface (AF1; AF2; AF3) is designed to be adjustable with respect to its distance from the axial direction (AR).

9. Device according to claim 8, in which the adjustable second outer surface (AF2) is formed by means of a U-profile which surrounds the first rod element (SE1) formed as a rectangular profile above the first outer surface (AF1), in which the adjustable outer surface is formed as an air cushion or air bellows (LB), or in which the adjustable outer surface is fastened to the first rod element (SE1) by means of an articulated rod (GS).

10. Device according to one of the claims 1 to 9, in which the first support element (SE1) and the second rod element (SE2) are provided at their opposite ends with a pin (ZA) which engages in the longitudinal rails (LS) which are preferably formed as airline rails on the floor or on the ceiling.

11. Device according to claim 10, in which an anti-rotation device (VS) is arranged in the region of the pin (ZA) on the first bar element (SE1) or on the second bar element (SE2).

12. Device according to claim 11, in which the anti-rotation device (VS) consists of two pins which are aligned with the pivots (ZA) along the first direction (RI1) or along the second direction (RI2).

13. Device according to any one of claims 11 and 12, wherein the pin (ZA) on the first rod member (SE1) and the pin (ZA) on the second rod member (SE2) are aligned along an axis which is parallel and spaced apart from the axial direction (AR) forming an axis of symmetry, the anti-rotation device (VS) and the pin (ZA) being preferably aligned with a point of intersection of the axial direction (AR) along the first direction (RI1).

## Revendications

1. Dispositif pour sécuriser une charge, en particulier au moyen d'un verrouillage vertical dans une carrosserie de véhicule frigorifique, qui comprend un premier élément de barre (SE1) et un deuxième élément de barre (SE2) qui peuvent être déplacés le long d'une direction axiale (AR) au moyen d'un mécanisme de tension (SM), le premier élément de barre (SE1) présentant, le long d'une première direction (RI1) qui est disposée perpendiculairement à la direction axiale (AR), présente une première surface extérieure (AF1) à une première distance (AB1) de la direction axiale (AR), et est disposée le long d'une deuxième direction (RI2), qui est différente de la première direction (RI1), est perpendiculaire à la direction axiale (AR) et forme un plan avec la première direction (RI1), **caractérisée en ce que** une seconde surface extérieure (AF2) à une seconde distance (AB2), **caractérisé en ce que** le premier élément de barre (SE1) et le second élément de barre (SE2) peuvent être verrouillés dans des rails longitudinaux (LS) et une cargaison (LG) de différentes dimensions est fixée soit par la première surface extérieure (AF1) soit par la seconde surface extérieure (AF2), que la première surface extérieure (AF1) recouvre sensiblement complètement le premier élément de barre (SE1) et que la deuxième surface extérieure (AF2) est formée à l'extrémité axiale dans la direction du rail longitudinal (LS) sur le premier élément de barre (SE1) et recouvre de préférence ce dernier dans une section d'extrémité (EA).

2. Dispositif selon la revendication 1, dans lequel la première distance (AB1) est inférieure à la seconde distance (AB2).

3. Dispositif selon l'une quelconque des revendications 1 et 2, dans lequel la première direction (RI1) et la deuxième direction (RI2) sont alignées dans différentes positions angulaires l'une par rapport à l'autre, les différentes positions angulaires étant de préférence sélectionnables en continu.

4. Dispositif selon la revendication 3, dans lequel la deuxième surface extérieure (AF2) est formée comme une surface latérale d'un disque excentrique cylindrique et la première surface extérieure (AF1) est formée comme un segment circulaire sur le disque excentrique.

5. Dispositif selon l'une quelconque des revendications 1 à 4, dans lequel la première direction (RI1) et la deuxième direction (RI2) sont formées perpendiculairement l'une à l'autre, de préférence le long d'une troisième direction (RI3), qui est disposée à l'opposé de la deuxième direction (RI2), est disposée une troisième surface extérieure (AF2), qui présente une troisième distance (AB3) à la direction axiale (AR), qui est choisie différente de la deuxième distance (AB2).

6. Dispositif selon l'une quelconque des revendications 1 à 5, dans lequel, à l'opposé de la partie d'extrémité (EA), un élément de support (BG) est monté sur le premier élément de tige dans la deuxième direction, lequel élément de support présente une surface de butée (AN) qui est de préférence disposée à la deuxième distance (AB2).

7. Dispositif selon la revendication 6, dans lequel l'élément d'étrier (BG) chevauche, au-delà du premier élément de barre (SE1), le deuxième élément de barre (SE2) au moins sur une partie.

8. Dispositif selon l'une quelconque des revendications 1 à 7, dans lequel au moins une surface extérieure (AF1 ; AF2 ; AF3) est conçue pour être réglable en ce qui concerne sa distance par rapport à la direction axiale (AR).

9. Dispositif selon la revendication 8, dans lequel la deuxième surface extérieure réglable (AF2) est formée au moyen d'un profil en U entourant le premier élément de tige (SE1) formé comme un profil rectangulaire au-dessus de la première surface extérieure (AF1), dans lequel la surface extérieure réglable est formée comme un coussin d'air ou un soufflet d'air (LB), ou dans lequel la surface extérieure réglable est fixée au premier élément de tige (SE1) au moyen d'une tige articulée (GS).

10. Dispositif selon l'une quelconque des revendications 1 à 9, dans lequel le premier élément de support (SE1) et le deuxième élément de tige (SE2) sont pourvus à leurs extrémités opposées d'un axe (ZA) qui s'engage dans les rails longitudinaux (LS), qui sont de préférence conçus comme des rails de ligne aérienne au sol ou au plafond.

11. Dispositif selon la revendication 10, dans lequel un dispositif anti-rotation (VS) est disposé dans la zone de la cheville (ZA) sur le premier élément de barre (SE1) ou sur le deuxième élément de barre (SE2).

12. Dispositif selon la revendication 11, dans lequel le dispositif anti-rotation (VS) comprend deux axes alignés avec les pivots (ZA) selon la première direction (RI1) ou selon la deuxième direction (RI2).

13. Dispositif selon l'une quelconque des revendications 11 et 12, dans lequel la goupille (ZA) du premier élément de tige (SE1) et la goupille (ZA) du deuxième élément de tige (SE2) sont alignées selon un axe parallèle et espacé de la direction axiale (AR) formant un axe de symétrie, le dispositif anti-rotation (VS) et la goupille (ZA) étant disposés au droit d'un point d'intersection de la direction axiale (AR) selon la première direction (RI1), de préférence.
